**Europäisches Patentamt**

**European Patent Office**

**Office européen des brevets**

(19)

(11) Veröffentlichungsnummer : **0 279 777 B2**

(12) **NEUE EUROPÄISCHE PATENTSCHRIFT**

(45) Veröffentlichungstag der neuen Patentschrift :
**09.03.94 Patentblatt 94/10**

(51) Int. Cl.⁵ : **C09J 7/02**

(21) Anmeldenummer : **88810065.8**

(22) Anmeldetag : **04.02.88**

(54) **Klebstoffilm.**

Die Akte enthält technische Angaben, die nach
dem Eingang der Anmeldung eingereicht
wurden und die nicht in dieser Patentschrift
enthalten sind.

(30) Priorität : **10.02.87 CH 488/87
17.03.87 CH 1009/87**

(43) Veröffentlichungstag der Anmeldung :
**24.08.88 Patentblatt 88/34**

(45) Bekanntmachung des Hinweises auf die
Patenterteilung :
**14.08.91 Patentblatt 91/33**

(45) Bekanntmachung des Hinweises auf die
Entscheidung über den Einspruch :
**09.03.94 Patentblatt 94/10**

(84) Benannte Vertragsstaaten :
**CH DE FR GB IT LI NL SE**

(56) Entgegenhaltungen :
**EP-A- 0 050 096
DE-A- 3 125 393**

(56) Entgegenhaltungen :
**FR-A- 2 201 184
FR-A- 2 404 039
NL-C- 94 814
US-A- 3 703 434
Habenicht, "Kleben, Grundlagen, Technologie, Anwendungen", Seiten 42, 100 und 106**

(73) Patentinhaber : **CIBA-GEIGY AG
Klybeckstrasse 141
CH-4002 Basel (CH)**

(72) Erfinder : **Mechera, Karl, Dr.
Im Baumgarten 14
CH-4132 Muttenz (CH)**
Erfinder : **Lehmann, Hans
Steinackerstrasse 11
CH-4147 Aesch (CH)**
Erfinder : **Urech, Karl
Muttenzerstrasse 91/7
CH-4133 Pratteln (CH)**
Erfinder : **Hayes, Barry James
Westlands High Street
Little Eversden Cambridge (GB)**
Erfinder : **Ball, Alain
79, De Vigier Avenue
Saffron Walden Essex CB10 2AY (GB)**

**Beschreibung**

Die vorliegende Erfindung betrifft einen mehrschichtigen Klebstoffilm sowie dessen Verwendung für die Verklebung tragender Metallteile, insbesondere in der Fahrzeugindustrie.

Bislang werden tragende Metallteile geschweisst. Die Vorteile der Verklebung tragender Metallteile verglichen mit dem Schweissen sind evident : Neben einer Gewichtsreduktion infolge erhöhter Energieabsorption der verklebten Teile und deren verbesserten Energieübertragung entfallen Investitionen in teure Schweissroboter. Die durch die Schweisspunkte erfolgte Umwandlung des Metalles, zum Beispiel beim Stahl, und die damit verbundene erhöhte Anfälligkeit des Metalles gegen Korrosion findet nicht mehr statt. Ausserdem haben Klebeverbindungen eine verbesserte Spaltüberbrückung und reduzieren damit erneut die Anfälligkeit solcher Verbindungen gegen Korrosion.

Bisherige Versuche, Klebstoffe zur Verbindung tragender Metallteile einzusetzen, etwa mit Epoxidharz-Pasten, erbrachten keine völlig befriedigende Lösung. An solche Teile werden heute ausserordentlich hohe Anforderungen gestellt, insbesondere bezüglich Korrosionsfestigkeit, hoher Schälfestigkeit und besonders hoher Schlagfestigkeit. Gerade die Festigkeit bei schlagartiger Belastung stellte bisher ein mittels Klebstoffen nur unbefriedigend zu lösendes Problem dar, was erklärt, dass im Fahrzeugbau Klebstoffe nur zur Verbindung nichttragender Teile eingesetzt werden. Dies trifft für flüssige und pastenförmige Klebstoffe, sowie Klebstoffilme zu.

Es sind auch mehrschichtige Klebstoffilme zur Anwendung in der Fahrzeugindustrie, insbesondere im Automobilbau beschrieben worden. So sind z.B. aus der DF-OS 3125393 zweiseitige Klebfilme mit zwei Duromerformulierungen als Kleber und einem textilen Gewebeträger als Reparaturhilfsmittel bekannt geworden. In der FR Publ. Nr. 2.201.184 werden Klebfilme aus einem hochfluorierten Elastomer und zwei hitzehärtbaren Epoxidharzschichten zur Verbindung von Materialien ungleicher Wärmeausdehnungskoeffizienten, etwa Metall und Glas, beschrieben.

Die vorliegende Erfindung betrifft einen mehrschichtigen Struktur-Klebstoffilm bestehend aus einem Elastomerträgerfilm, aus Styrol-Butadien-Kautschuk (SBR), Acrynitril-Butadien-Kautschuk (NBR) oder einem Polyurethan elastomer, welcher auf beiden Seiten mit einem duromeren Konstruktionsklebstoffilm beschichtet ist.

Die genannten Elastomere sind dem Fachmann gut bekannt und in verschiedenen Modifikationen und Zusammensetzungen im Handel erhältlich. Die Dicke des Films beträgt dabei 0,05 bis 1,5 mm, bevorzugt 0,15 bis 1,5 mm. Besonders gute Resultate lassen sich erzielen, wenn die Oberfläche des Elastomerfilms texturiert ist.

In einer besonders bevorzugten Ausführungsform ist der Elastomerträgerfilm perforiert. Die Perforationen können in Form von ausgestanzten Löchern oder in Form von Einschnitten bzw. Schlitzen vorliegen. Damit wird erreicht, dass die Duromeren an verschiedenen ausgewählten Stellen in direkten Kontakt treten. Ueberraschenderweise wird dadurch die Schlagfestigkeit weiter erhöht. Ausserdem wird das Verhalten unter dynamischer und statischer Last, die Dauerstandfestigkeit verbessert. Dies zeigt sich besonders bei erhöhter Temperatur, ohne dass sich die ausgezeichneten Tieftemperatureigenschaften verschlechtern. Der Anteil der Perforation kann bezogen auf die Gesamtfläche des Elastomerträgerfilms bis zu 70% ausmachen, bevorzugt beträgt sie 10 bis 60%, und insbesondere 10-30%. Der Durchmesser der Perforation beträgt z.B. 0,5 bis 5 mm, insbesondere 1,0 bis 3,0 mm.

Als duromere Konstruktionsklebstoffe eignen sich ein Polyadditions-, ein Polykondensations- oder ein Polymerisations-Klebstoff. Die Duromerschicht hat eine Dicke von 0,05 bis 1 mm, bevorzugt 0,15 bis 0,5 mm.

Typische Vertreter von Polyadditionsklebstoffen sind Epoxidharze. Für die vorgesehene Anwendung eignen sich warmhärtende Epoxidharzklebstoffe. Typische Reaktionspartner sind Carbonsäureanhydride, Phenole oder Polyamine. Als Härter bzw. Härtungsbeschleuniger seien hier z.B. folgende Substanzen erwähnt. Cyanamid, Dicyandiamid, Hydrazide, Friedel-Crafts-Katalysatoren wie Bortrifluorid und Bortrichlorid und ihre Komplexe und Chelate, die durch Umsetzung von Bortrihalogeniden mit z.B. 1,3-Diketonen erhalten werden. Ferner sind auch Imidazole wie 1-Methylimidazol zu erwähnen. Art und Menge von Härter bzw. Härtungskatalysatoren sind dem Fachmann geläufig und gestatten ihm, Klebstoffsysteme hinsichtlich Klebschichteigenschaften und Aushärtungsbedingungen den speziellen Erfordernissen anzupassen. In entscheidendem Masse werden durch die jeweiligen Formulierungen auch die Verarbeitungsbedingungen, speziell die Topfzeit bestimmt. Als besonders bevorzugt sind hier die Einkomponenten-Epoxidharzklebstoffe hervorzuheben, Da die aus beiden Komponenten bestehende Reaktionsmischung hierbei vom verarbeitungstechnischen Gesichtspunkt als eine Komponente angesehen werden kann, werden derartige Systeme auch als Einkomponenten-Reaktionsklebstoffe bezeichnet. Die Einkomponenten-Reaktionsklebstoffe besitzen den Vorteil, dass Dosierungsfehler bei der Anwendung ausgeschlossen sind, da die beiden Komponenten bereits beim Klebstoffhersteller gemischt werden.

Gut geeignet sind auch Elastomer-modifizierte Epoxidharze. Diese sind unter der Bezeichnung zäh-harte (toughened) Epoxidharzklebstoffe bekannt. Dabei werden dem Epoxidharz bis zu 10 Gew.% eines Kautschuks, z.B. Acrylnitril-Butadienkautschuk, zugegeben. Die Kautschukpartikel verteilen sich in dem Polymer und verleihen erhöhte Zähigkeit ohne die Kohäsionsfestigkeit wesentlich herabzusetzen.

Eine andere Klasse von Klebstoffen, welche unter den Begriff Polyadditionsklebstoffe fallen, sind Einkomponenten-Polyurethanklebstoffe. Da die einfachen, niedrigmolekularen Polyisocyanate bei einer Reaktion mit Feuchtigkeit relativ harte und spröde Klebschichten mit niedrigen Festigkeitswerten bilden, geht man bei den Einkomponentensystemen vorzugsweise von vorvernetzten Polymeren, sog. Präpolymeren, aus. Diese verbindungen sind bekannt, und werden aus höhermolekularen Polyolen mit einem stöchiometrischen Ueberschuss an Isocyanat hergestellt. Auf diese Weise liegen Verbindungen vor, die bereits Urethanbildungen besitzen, aber andererseits noch reaktionsfähige Isocyanatgruppen aufweisen, die der Reaktion mit Feuchtigkeit zugänglich sind.

Neben diesen Einkomponenten-Polyurethanklebstoffen, kommen für die erfindungsgemässe Anwendung auch thermisch aktivierbare Polyurethanklebstoffe, d.h. Verbindungen in welchen die Isocyanatgruppe verkappt bzw. blockiert vorliegt, und die Isocyanatgruppe erst bei höherer Temperatur abgespalten wird, in Frage, sowie reaktive Polyurethan-Schmelzklebstoffe, die bekanntlich bei Verwendung höhermolekularer, kristallisierender und schmelzbarer Diol- und Isocyanatkomponenten herstellbar sind. Die Vernetzung der schmelzbaren Präpolymere erfolgt wiederum durch zusätliche Feuchtigkeitseinwirkung, welche auf die noch vorhandenen reaktionsfähigen Isocyanatgruppen wirkt und die Vernetzung über Harnstoffbindungen zum Klebschichtpolymer erfolgt.

Unter dem Begriff Polykondensations-Klebstoff werden im Rahmen der vorliegenden Erfindung Formaldehydkondensate, Polyimide und Polysulfone verstanden. Unter den Formaldehydkondensaten sind Phenol-Formaldehydharz-Klebstoffe und Kresol-/Resorcin-Formaldehydharz-Klebstoffe besonders bevorzugt. Es ist dem Fachmann bekannt, dass unter den Phenol-Formaldehydharzen für die Verwendung als Klebstoff nur die sogenannten Resole in Frage kommen. Das sind härtbare Phenolharze, die im Anfangsstadium zwar löslich und schmelzbar sind, die aber in der Klebfuge durch Hitze oder Katalysatoreinwirkung in den unlöslichen, unschmelzbaren Zustand, die sogenannten Resite, mit hohem Vernetzungsgrad übergeführt werden können. Reine Phenol-Formaldehydharze werden wegen oft störender Sprödigkeit mit weiteren Verbindungen durch Copolymerisation bzw. Mischkondensation mit geeigneten, vorwiegend thermoplastische Polymere ergebenden Monomeren modifiziert. z.B. mit Polyvinylformal, Polyvinylbutyral, Polyamiden, Elastomeren wie Polychloropren, Nitrilkautschuk, sowie Epoxidharzen und ähnlichen Materialien.

Entsprechende Modifizierung benötigen in Regel auch die Kresol- und die Resorcin-Formaldehydharz-Klebstoffe. Diese zeichnen sich generell durch eine höhere Härtungsgeschwindigkeit und grösserer Beständigkeit gegenüber Witterungseinflüssen aus.

Polyimid-Klebstoffe zeichnen sich besonders durch ihre hohe Temperaturbeständigkeit aus. Die Herstellung technisch nutzbarer Polyimide erfolgt durch Umsetzung der Anhydride vierbasischer Säuren, z.B. Pyromellithsäureanhydrid mit aromatischen Diaminen, z.B. Diaminodiphenyloxid. Die Anwendung erfolgt in Form von Vorkondensat-Filmen.

Unter den Polymerisationsklebstoffen sind besonders die Acrylharze bzw. Methacrylharze von Bedeutung. Die Tatsache, dass es sich bei der Radikalkettenpolymerisation des MMA-Monomers nach Vereinigen der Komponenten Monomer, Härter und Beschleuniger um sehr schnell verlaufende Reaktionen handelt, hat für die praktische Anwendung zu mehreren Entwicklungen einer fertigungsgerechten Verarbeitung geführt. Dem Fachmann sind diese als A-B-Verfahren und Härtelack-Verfahren (No-mix-Verfahren) bekannt.

Bei allen den erwähnten duromeren Konstruktionsklebstoffen handelt es sich um grundsätzlich bekannte Klebstoffe. Die Wahl des bestimmten Systems richtet sich nach den besonderen Anforderungen einer bestimmten Anwendung. Die Vorzüge, welche ein bestimmter Konstruktionsklebstoff grundsätzlich innehat, sind dem Fachmann an sich bekannt. Es konnte jedoch nicht vorhergesehen werden, dass die mit den beanspruchten Strukturklebstoffilmen voll verklebten tragenden Teile in der Lage sind, gleiche und zum Teil höhere Energien zu absorbieren als verschweisste Konstruktionen. Dieses völlig überraschende Verhalten, gekoppelt mit den Vorzügen von Verklebungen allgemein, so z.B. dem optimalen Korrosionsschutz. ermöglichen eine billige, saubere und dauerhafte Verklebung tragender Teile im Fahrzeugbau und machen die Anwendung der erfindungsgemässen Filmen besonders attraktiv im serienmässigen Automobilbau.

Unter dem Begriff Strukturklebstoff bzw. Konstruktionsklebstoff werden Klebstoffe verstanden, welche im ausgehärteten Zustand über mechanische Eigenschaften verfügen, die eine bestimmte Mindesthöhe haben, dauerfest sind, reproduzierbar eingestellt werden können und deshalb für eine verlässliche Berechnung und Dimensionierung von Klebeverbindungen herangezogen werden können. Im weiteren Sinne gestatten diese Klebstoffe, unter Berücksichtigung der zu fordernden Beanspruchungsbedingungen und bei entsprechender Bauteilkonstruktion, eine Klebung unter möglichst wirtschaftlicher Fügeteilnutzung herzustellen. Bei den hier gewählten und dem Fachmann geläufigen Begriffen handelt es sich um Bezeichungen, die im wesentlich der Abgrenzung zu Klebstoffsystemen genngerer Klebschichtfestigkeiten, z.B. bei Kontakt- oder Haftklebstoffen, dienen.

Selbstverständlich eignen sich als Konstruktionsklebstoffilme auch Gemische der oben erwähnten Duromere, dass heisst, die Strukturklebstoffilme können mit chemisch voneinander verschiedenen Konstruktionsklebstoffilmen beschichtet sein. Bevorzugt werden Epoxidharz-Klebstoffe bzw. Gemische aus zwei verschiedenen Epoxidharzen.

Die Herstellung der erfindungsgemässen mehrschichtigen Strukturklebstoffilme ist bekannt. Dabei kann man beispielsweise so vorgehen, dass eine Lösung des Duromeren oder vorzugsweise eine Schmelze mit einem Rakel auf den Elastomerträgerfilm gebracht wird. Dieser auf diese Weise hergestellte mehrschichtige Film wird bei einer Temperatur gelagert, bei der die Aushärtung noch nicht stattfindet. Ein besonderer Vorteil der Klebfilm-Technologie besteht in der Konfektionierung. Hierunter versteht man das Zusammenbringen eines auf Mass zugeschnittenen Folienabschnitts mit dem Fügeteil. Das Abbinden der Klebschicht geschieht dann nach Vereinigung mit dem zweiten Fügeteil unter dem Einfluss von Energie. Die Aushärtungsreaktion erfolgt in Abhängigkeit von den Ausgangsmonomeren normalerweise bei Temperaturen zwischen 80° bis 250°C. Dabei ist zu beachten, dass bei der Auswahl der Klebstoffe bei dieser Art von Kombinationsklebung ähnliche Aushärtungsparameter von Zeit und Temperatur eine Voraussetzung sind, um in allen Fällen unter den gleichen Bedingungen optimal aushärtende Klebschichten zu erhalten.

Um eine optimale Haftung zwischen Elastomerträgerfilm und duromerem Konstruktionsklebstoffilm zu erreichen wird die Trägerfolie in einer bevorzugten Ausführungsform der vorliegenden Erfindung vorbehandelt. Die Vorbehandlung der Polyurethan-Elastomere erfolgt bekanntermassen durch Aufbringen eines sogenannten Primers, z.B. eines Silanhaftvermittlers. Bei den Styrol-Butadien- und Acrylnitril-Butadien-Kautschuken wird die Oberfläche vorzugsweise anoxidiert, z.B. durch Behandlung mit Schwefelsäure, einem Sauerstoffplasma oder mittels Corona-Strahlung. Dabei handelt es sich um übliche Techniken, welche bislang an den zahlreichen handelsüblichen Elastomerfilmen durchgeführt werden.

Die duromeren Konstruktionsklebstoffilme, welche auf beiden Seiten des Trägerfilms aufgetragen werden, sind bevorzugt chemisch identisch ; sie können aber auch verschieden sein, um den verschiedenen zu verklebenden Materialien Rechnung zu tragen.

Gewünschtenfalls kann man den erfindungsgemässen Gemischen zur Einstellung der Viskosität reaktive Verdünner, wie beispielsweise Styroloxid, Butylglycidyläther, 2,2,4-Trimethylpentylglycidyläther, Phenylglycidyläther, Kresylglycidyläther oder Glycidylester von synthetischen, hochverzweigten, in der Hauptsache tertiären aliphatischen Monocarbonsäuren, zusetzen. Als weitere übliche Zusätze können die erfindungsgemässen Gemische ferner Weichmacher, Streck-, Füll- und Verstärkungsmittel, wie beispielsweise Steinhohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Betonite, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Beispiel 1 :

Zum Verkleben von Stahlblechen wurde ein Filmsystem folgender Zusammensetzung hergestellt :

A) Elastomerträgerfilm 0,25 mm dicker Styrol-Butadien-Kautschukfilm (im Handel erhältlich, Shore-Härte 63-70, Zugfestigkeit 15-20 M Pa, Oberfläche texturiert).
B) Duromerer Konstruktionsklebstoff :
20 Gew.%    flüssiges Epoxidharz auf Basis von Bisphenol A (Epoxidgehalt 5,3 Aeq./kg)
35 Gew.%    eines mit einem carboxyterminierten Butadienkautschuk (CTBN-Rubber) modifizierten Epoxidharzes auf Basis von Bisphenol A (Epoxidgehalt 5,3 Aeq./kg) mit dem Verhältnis 30 : 70
20 Gew.%    festes Epoxidharzes auf Basis von Bisphenol A (Epoxidgehalt 1,6 Aeq./kg)
20 Gew.%    Kreide
2,5 Gew.%    Dicyandiamid
1,0 Gew.%    Monuron
1,5 Gew.%    Aerosil-Thixotropiemittel

Die Epoxidharze der duromeren Klebstoffzusammensetzung werden in einem Doppelmuldenkneter bei 100-130°C unter Vakuum homogen vermischt. Nacheinander werden der Füllstoff, der Beschleuniger, Monuron und Thixotropiemittel ebenfalls unter Vakuum zugemischt, unter gleichzeitigem Fallenlassen der Temperatur den Mischung auf 80°C.

Der so hergestellte duromere Konstruktionsklebstoff (A) wird auf einem Rakel-Beschichter bei 80-90°C beidseitig auf den Elastomerträgerfilm in einer Dicke von je 0,1 mm aufgetragen.

Beispiel 2 :

Der mehrschichtige Klebfilm gemäss Beispiel 1 wird zwischen zwei geölte Stahlbleche (Stahl 1403) gelegt und während 30 min. bei 180°C ausgehärtet. Die verklebte Konstruktion besitzt folgende Eigenschaften :
(a) Zugscherfestigkeit nach DIN 53 283 : 8-9 N/mm$^2$
(b) Rollenschälfestigkeit nach DIN 53 289 : 8-10 N/mm
Nach 28 Zyklen (16 h bei 80%, 99% Feuchtigkeit und 4 h bei-30°C) :
(c) Zugscherfestigkeit nach DIN 53 283 : 6-8 N/mm$^2$
(d) Korrosion : keine, Kohäsionsbruch.

Beispiel 3 :

Analog dem Beispiel 1 wurde ein Filmsystem gleicher chemischer Zusammensetzung hergestellt, wobei der texturierte Elastomerfilm A) jedoch eine Dicke von 0,4 mm und die Konstruktionsklebstoffschichten eine solche von je 0,5 mm aufwies. Dieser mehrschichtige Klebfilm wird zwischen zwei geölte Stahlbleche (Stahl 1403) gelegt und während 30 min. bei 180°C ausgehärtet Die verklebte Konstruktion besitzt folgende Eigenschaften :
(a) Zugscherfestigkeit nach DIN 53 283 : 11 N/mm$^2$
(b) Rollenschälfestigkeit nach DIN 53 289 : 16 N/mm
(c) Schlagzähigkeit : 37 Nm

Beispiel 4

Analog dem Beispiel 1 wurde ein Filmsystem gleicher chemischer Zusammensetzung hergestellt, wobei der texturierte Elastomerfilm A) eine Dicke von 0,4 mm und gleichmässig verteilte Perforationen mit einem Durchmesser von 2 mm aufwies und die Konstruktionsklebstoffschicht jeweils 0,3 mm dick war. Dieser mehrschichtige Klebfilm mit dem unten angegebenen Perforationsanteil in der Elastomerschicht wird zwischen zwei geölte Stahlbleche (Stahl 1403) gelegt und während 30 min. bei 180°C ausgehärtet. Die verklebte Konstruktion besitzt folgende Eigenschaften :

|  | flächenmässiger Anteil der Perforationen im Elastomerfilm | | |
|---|---|---|---|
|  | 10 % | 30 % | 60 % |
| (a) Zugscherfestigkeit: nach DIN 53 283 | 7-8 N/mm$^2$ | 6-7 N/mm$^2$ | 6-7 N/mm$^2$ |
| (b) Rollenschälfestigkeit nach DIN 53 289 | 17 N/mm | 16 N/mm | 14 N/mm |

**Patentansprüche**

1.  Mehrschichtiger Strukturklebstoffilm bestehend aus einem Elastomerträgerfilm aus Styrol-Butadien-Kautschuk (SBR), Acrylnitril-Butadien-Kautschuk oder einem Polyurethan-elastomer, welcher auf beiden Seiten mit einem duromeren Konstruktionsklebstoffilm beschichtet ist.

2.  Film gemäss Anspruch 1, dadurch gekennzeichnet, dass der Elastomerträgerfilm perforiert ist.

3.  Film gemäss Anspruch 1, dadurch gekennzeichnet, dass der duromere Konstruktionsklebstoffilm ein Polyadditions- ein Polykondensations- oder ein Polymerisations-Klebstoff ist.

4.  Film gemäss Anspruch 3, dadurch gekennzeichnet, dass der Polyadditionsklebstoff ein wärmehärtbarer Epoxidharzklebstoff ist.

5.  Film gemäss Anspruch 3, dadurch gekennzeichnet, dass der Polyadditionsklebstoff ein Einkomponenten-Epoxidharzklebstoff ist.

6.  Film gemäss Anspruch 3, dadurch gekennzeichnet, dass der Polyadditionsklebstoff ein feuchtigkeitshärtender Polyurethanklebstoff ist.

7.  Film gemäss Anspruch 3, dadurch gekennzeichnet, dass der Polyadditionsklebstoff ein Einkomponenten-Polyurethanklebstoff ist.

8.  Film gemäss Anspruch 3, dadurch gekennzeichnet, dass der Polykondensationsklebstoff ein Phenol- oder Kresol-/Resorcin-Formaldehydharz-Klebstoff ist.

9.  Film gemäss Anspruch 3, dadurch gekennzeichnet, dass der Polykondensationsklebstoff ein Polyimid ist.

10. Film gemäss Anspruch 3, dadurch gekennzeichnet, dass der Polymerisations-Klebstoff ein Acrylat-, bzw. ein Methacrylatharz ist.

11. Film gemäss Anspruch 1, dadurch gekennzeichnet, dass der Elastomerträgerfilm eine Dicke von 0,05 bis 1,5 mm und die Konstruktionsklebstofffilme eine Dicke von je 0,05 bis 1 mm besitzt und das mehrschichtige System eine Minimaldicke von 0,5 mm besitzt.

12. Film gemäss Anspruch 1, dadurch gekennzeichnet, dass die beiden Konstruktionsklebstofffilme chemisch identisch sind.

13. Verwendung der Filme gemäss Anspruch 1 zum Verkleben von tragenden Teilen.


**Claims**

1.  A multilayer structural adhesive film consisting of an elastomeric base film of styrene-butadiene (SBR) or acrylonitrile-butadiene rubber (NBR) or a polyurethane elastomer which is coated on both sides with a thermosetting constructional adhesive film.

2.  A film according to claim 1, wherein the elastomeric base film is perforated.

3.  A film according to claim 1, wherein the thermosetting constructional adhesive film is a polyaddition, a polycondensation or a polymerization adhesive.

4.  A film according to claim 3, wherein the polyaddition adhesive is a hot-curing epoxy resin adhesive.

5.  A film according to claim 3, wherein the polyaddition adhesive is a single-component epoxy resin adhesive.

6.  A film according to claim 3, wherein the polyaddition adhesive is a moisture-curing polyurethane adhesive.

7.  A film according to claim 3, wherein the polyaddition adhesive is a single-component polyurethane adhesive.

8.  A film according to claim 3, wherein the polycondensation adhesive is a phenol- or cresol-/resorcinol-formaldehyde resin adhesive.

9.  A film according to claim 3, wherein the polycondensation adhesive is a polyimide.

10. A film according to claim 3, wherein the polymerization adhesive is an acrylate resin or a methacrylate resin.

11. A film according to claim 1, wherein the elastomeric base film has a thickness of 0.05 to 1.5 mm and the constructional adhesive films have a thickness of 0.05 to 1 mm each and the multilayer system has a minimum thickness of 0.5 mm.

12. A film according to claim 1, wherein the two constructional adhesive films are chemically identical.

13. Use of a film according to claim 1 for bonding load-bearing parts.

**Revendications**

1. Film adhésif structural multicouche, constitué d'un support pelliculaire élastomère en un caoutchouc styréne-butadiène (SBR), un caoutchouc acrylonitrile-butadiène ou un élastomère de polyuréthanne, qui, sur ses deux faces, est revêtu d'un film adhésif de construction thermoplastique.

2. Film selon la revendication 1, caractérisé en ce que le support pelliculaire élastomère est perforé.

3. Film selon la revendication 1, caractérisé en ce que le film adhésif de construction thermoplastique est un adhésif de polyaddition, de polycondensation ou de polymérisation.

4. Film selon la revendication 3, caractérisé en ce que l'adhésif de polyaddition est un adhésif à base d'une résine époxyde pouvant durcir à la chaleur.

5. Film selon la revendication 3, caractérisé en ce que l'adhésif de polyaddition est un adhésif à base d'une résine époxyde à un composant.

6. Film selon la revendication 3, caractérisé en ce que l'adhésif de polyaddition est un adhésif à base de polyuréthanne pouvant durcir à l'humidité.

7. Film selon la revendication 3, caractérisé en ce que l'adhésif de polyaddition est un adhésif à base de polyuréthanne à un composant.

8. Film selon la revendication 3, caractérisé en ce que l'adhésif de polyaddition est un adhésif à base d'une résine de phénol- ou de crésol-/résorcinol-formaldéhyde.

9. Film selon la revendication 3, caractérisé en ce que l'adhésif de polycondensation est un polyimide.

10. Film selon la revendication 3, caractérisé en ce que l'adhésif de polymérisation est une résine à base d'un acrylate ou d'un méthacrylate.

11. Film selon la revendication 1, caractérisé en ce que le support pelliculaire élastomère a une épaisseur de 0,05 à 1,5 mm et que les films adhésifs de construction ont chacun une épaisseur de 0,05 à 1 mm, le système multicouche ayant une épaisseur minimale de 0,5 mm.

12. Film selon la revendication 11 caractérisé en ce que les deux films adhésifs de construction sont chimiquement identiques.

13. Utilisation des films selon la revendication 1 pour le collage de pièces portantes.